# EUROPÄISCHE PATENTSCHRIFT

(11) **EP 1 837 415 B1**
(45) Veröffentlichungstag und Bekanntmachung des Hinweises auf die Patenterteilung: **03.02.2016**
(21) Anmeldenummer: 07450033.1
(22) Anmeldetag: 21.02.2007
(51) Int. Cl.: C22C 38/22, C22C 38/24, F16C 33/62

(54) **Legierung für Wälzlager**
Alloy for roller bearings
Alliages pour palier à roulement

(30) Priorität: 20.03.2006 AT 4562006
(43) Veröffentlichungstag der Anmeldung: 26.09.2007
(73) Patentinhaber: BÖHLER Edelstahl GmbH & Co KG, 8605 Kapfenberg (AT)
(72) Erfinder: Rabitsch, Roland, 8970 Schladming (AT); Ebner, Reinhold, 8793 Trofaiach (AT); Peissl, Sven, 8741 Weisskirchen (AT); Eglsäer, Sabine, 8600 Bruck/Mur (AT)
(74) Vertreter: Wirnsberger, Gernot

(56) Entgegenhaltungen:
- EP-A1- 0 718 416
- DE-A1- 19 707 033
- JP-A- 2000 204 445
- JP-A- 2006 038 167
- US-A- 4 150 978

## Beschreibung

Die Erfindung betrifft eine Legierung für Wälzlager von Luftfahrzeugen.

Weiter hat die Erfindung ein Lager oder Lagerteil zum Gegenstand.

Wälzlager von Fahrzeugen sind im Betrieb vielfältigen Belastungen und Beanspruchungen ausgesetzt, welchen sie möglichst lange standhalten sollten. Zu diesen zählen unter anderem dynamische mechanische Belastungen durch das Aneinandergleiten bzw. Rollen von Lagerteilen ebenso wie Korrosionsangriff durch aggressive Schmiermittel. Bei Luftfahrzeugen kommt erschwerend hinzu, dass Arbeitstemperaturen von Wälzlagern im Bereich von mehreren hundert Grad Celsius liegen können. Beispielsweise können bei Wälzlagern von Flugzeugturbinen selbst in der Nachlaufphase, wenn zwar eine Belastung gering ist, aber keine Kühlung mehr gegeben ist, Temperaturen um 250 °C gemessen werden.

An Wälzlager von Luftfahrzeugen werden daher ganz besonders hohe Anforderungen gestellt, die sie hinsichtlich Belastbarkeit und Gebrauchsdauer erfüllen müssen, um einsatztauglich zu sein. Gefordert werden große Festigkeit und Zähigkeit, geringer Verschleiß und geringe Rollkontaktermüdung im Einsatz sowie eine hohe Korrosionsbeständigkeit auch bei erhöhten Temperaturen. Daneben soll eine Oberfläche der Wälzlager gegenüber dem Additiv Tricresylphosphat, welches im überwiegend eingesetzten Flugturbinenöl Mobil Jet II vorhanden ist, eine befriedigende Reaktivität aufweisen, so dass eine schützende Reaktionsschicht zur Verschleißminimierung gebildet werden kann. Die Reaktivität der Lageroberfläche mit dem Schmierstoffadditiv ist von der chemischen Beschaffenheit der Lageroberfläche stark abhängig. Gesamt betrachtet ergibt sich daraus ein vielschichtiges Anforderungsprofil an Wälzlager für Luftfahrzeuge. Dieses soll durch Einsatz einer geeigneten Legierung erfüllt werden.

Nach DIN 17230 werden die gängigsten Wälzlagennrerkstoffe in fünf Gruppen unterteilt, nämlich erstens durchhärtbare Wätzlagerstähle (z. B. 100Cr6 oder SAE 52100), zweitens Einsatzstähle (z.B. 17MnCr5 oder SAE 8620), drittens Vergütungsstähle (z.B. 43CrMo4 oder SAE 4340), viertens korrosionsbeständige Stähle (z.B. AISI 440C, X30CrMoN15 oder X45Cr13) und fünftens warmfeste Stähle und Hartlegierungen (z.B. M50 oder AISI T1). Für Lager von Luftfahrzeugen haben sich aus den zur Verfügung stehenden Werkstoffgruppen warmfeste Stähle durchgesetzt, wobei überwiegend die Legierung M50, ein niedrig legierter Schnellarbeitsstahl, und Varianten dieser Legierung eingesetzt werden. Die seit Jahrzehnten führende Rolle der Legierung M50 als Wälzlagerwerkstoff für Luftfahrzeuge ergibt sich aus deren mechanischen Eigenschaften und guten Ermüdungseigenschaften. Hingegen ist eine Korrosionsbeständigkeit völlig unbefriedigend, was aber mangels alternativer Legierungen bislang toleriert wird.

Da der stete Wunsch nach leistungsfähigeren und zuverlässigeren Wälzlagern besteht, wird versucht, gegenüber Legierung M50 verbesserte Legierungen zu finden. In US 4,150,978 sind einzelne Legierungen im Zusammensetzungsbereich (in Gew.-%) 0.8 bis 1.6 % Kohlenstoff, max. 0.5 % Silicium, max. 0.5 % Mangan, max. 0.1 % Schwefel, max. 0.015 % Phosphor, 12 bis 20 % Chrom, 2 bis 5 % Molybdän, bis zu 3 % Wolfram, 0.5 bis 3.0 % Vanadium, bis zu 0.5 % Titan, max. 0.03 % Aluminium, max. 0.5 % Nickel, max. 0.5 % Cobalt, max, 0.5 % Kupfer, max. 0.05 % Bor, max. 0.05 % Stickstoff, Rest Eisen und Verunreinigungen, offenbart. Diese Legierungen weisen gegenüber M50 ein verbessertes Verhalten im Rollkontaktversuch auf und sollen auch in korrosiven Medien einsetzbar sein, konnten sich jedoch in der Praxis nicht durchsetzen.

Ein anderer Ansatz besteht heute darin, randschichthärtende korrosionsbeständige Legierungen mit max. 0.1 Gew.-% Kohlenstoff und Chromgehalten von zumindest 13 Gew.-% einzusetzen. Um ausreichende Oberflächenhärten und damit eine ausreichende Verschleißbeständigkeit zu erzielen, müssen diese Werkstoffe jedoch randschichthärtenden Verfahren, wie z.B. Aufkohlen und Aufsticken unterzogen werden, wobei jedoch die Korrosionseigenschaften durch den Aufkohlungs- bzw. Aufstickungsprozesses beträchtlich in Mitleidenschaft gezogen werden.

Bekannte Legierungen für Wälzlager von Luftfahrzeugen können zwar im Hinblick auf das eingangs beschriebene Anforderungsprofil jeweils mehrere Eigenschaften erfüllen, fallen aber jeweils in zumindest einer Eigenschaft, beispielsweise Korrosionsbeständigkeit, stark ab. Ein solcher Abfall in einer Eigenschaft ist zumeist ausreichend, um die Einsatzdauer stark herabzusetzen und somit den Anwendungsbereich eines Wälzlagers zu beschränken. Für den Wert und die Nutzungsdauer eines Wälzlagers ist es letztlich egal, ob dieses aufgrund von Ermüdungs- oder Korrosionserscheinungen auszutauschen ist. Mit anderen Worten: Beste mechanische Eigenschaften können nicht ausgenutzt werden, wenn Korrosion zum vorzeitigen Versagen des Lagers führt. Umgekehrt nützt höchste Korrosionsbeständigkeit nicht, wenn nach kurzen Einsatzzeiten Ermüdungsbrüche und/oder vorzeitiger Verschleiß eintreten.

DE 19707033 offenbart ein Wälzlager, gekennzeichnet durch einen inneren Laufring, einen äusseren Laufring und Wälzelemente (wälzkörper), wobei mindestens ein Vertreter aus der Gruppe innerer Laufring, äusserer Laufring und Wälzelemente (Wälzkörper) aus einem Legierungstahl hergestellt ist, der im wesentlichen besteht aus weniger als 0,5 Gew.-% C, 8,0 bis 20,0 Gew.-% Cr, 0,1 bis 1,5 Gew.-% Mn, 0,1 bis 2,0 Gew.-% Si und zum Rest aus Fe und zufälligen Verunreinigungs-Elementen, wobei die Beziehung zwischen den C-und Cr-Gehalten der Bedingung genügt:
0,04 Cr (Gew.-%) - 0,39 ≤C (Gew.-%) ≤ -0,05 Cr (Gew.-%) + 1,41,
wobei dieser mindestens eine Vertreter eine Oberflächenschicht aufweist, die durch Nitrierung oder Carbonitrierung bei einer Temperatur unterhalb Ac1, anschliessendes Erhitzen auf eine. Temperatur von 900 bis 1200° C, Härten, eine Tieftemperaturbehandlung (unter 0° C) und Anlassen erzeugt worden ist.

Davon ausgehend ist es Ziel der Erfindung, eine Legierung bereitzustellen, aus der Wälzlager herstellbar sind, die neben guten mechanischen Eigenschaften, geringem Verschleiß und niedriger Rollkontaktermüdung auch große Korrosionsbeständigkeit aufweisen.

Ein weiteres Ziel der Erfindung ist die Angabe von Lagern oder Lagerteilen, insbesondere Wälzlagern oder Wälzlagerteilen, die neben guten mechanischen Eigenschaften, geringem Verschleiß und niedriger Rollkontaktermüdung auch große Korrosionsbeständigkeit aufweisen.

Das erste Ziel der Erfindung wird durch eine Legierung nach Anspruch 1 gelöst. Vorteilhafte Varianten einer erfindungsgemäßen Legierung sind Gegenstand der Ansprüche 2 bis 9.

Die Vorteile einer erfindungsgemäßen Legierung liegen insbesondere in ihrem Eigenschaftsprofil, aufgrund dessen sich die Legierung exzellent für Wälzlager von Luftfahrzeugen eignet. Dieses Eigenschaftsprofil umfasst insbesondere hohe Festigkeit, geringen Verschleiß und geringe Rollkontaktermüdung bei Einsatz als Wälzlagerwerkstoff und eine außerordentlich hohe Korrosionsbeständigkeit. Damit dieses Eigenschaftsprofil erreicht wird, sind die Gehalte einzelner Legierungselemente gezielt abgestimmt, wobei die erfindungsgemäßen Gehalte Ausdruck sowohl der Wirkungen einzelner Legierungselemente als auch der Wechselwirkungen zwischen ihnen sind. Diese Wirkungen sind nachstehend beschrieben.

Bei einer erfindungsgemäßen Legierung liegen neben Eisen und herstellungsbedingten Verunreinigungen Elemente mit folgenden Gehalten (in Gewichtsprozent) vor:

Kohlenstoff (C) ist mit einem Gehalt von 0.45 bis 1.0 % vorgesehen, um einer erfindungsgemäßen Legierung eine hohe Härte zu verleihen. Bei Gehalten über 1.0 % besteht die Gefahr, dass sich besonders die chromreichen Metallcarbide des Typs M₇C₃ bilden, wodurch dieses Metall, welches für eine Korrosionsbeständigkeit verantwortlich ist, der Matrix entzogen wird und folglich eine Korrosionsbeständigkeit absinkt. Diese M₇C₃-Carbide sind zudem grob, was sich bei Lagern negativ auf das Verschleißverhalten auswirkt. Gehalte unter 0.45 % führen zu niedriger Härte und es besteht die Möglichkeit, dass sich bei der Herstellung unerwünschter δ-Ferrit ausbildet. Ein optimaler Gehalt an Kohlenstoff liegt im Bereich von 0.55 bis 0.75 %. In diesem Gehaltsbereich kann eine günstige Carbidmorphologie, nämlich überwiegende Ausbildung von MC-Carbiden bzw. MC-Mischcarbiden, erreicht werden. MC-Carbide tragen zu einer großen Härte bei, beeinträchtigen aber eine Korrosionsbeständigkeit nicht, da nur wenig zur Passivschichtbildung erforderliches Chrom aus der Matrix entzogen wird.

In einer erfindungsgemäßen Legierung kann Mangan (Mn) bis maximal 2.0 % vorhanden sein. Um eine Restaustenitbildung gering zu halten, wird ein Mangangehalt bevorzugt auf maximal 0.3 % beschränkt.

Silicium (Si) ist zur Desoxidation erforderlich und kann in Gehalten bis maximal 1.0 % vorgesehen sein. Da Silicium stark versprödend wirken kann und eine Ausbildung von 8-Ferrit begünstigt, ist es von Vorteil, Siliciumgehalte im Bereich von 0:05 bis 0.2 % zu halten.

Wie Silicium begünstigt Aluminium (Al) eine Ausbildung von 8-Ferrit. Ein Aluminiumgehalt sollte daher maximal 0.1 % betragen.

Chrom (Cr) ist in Gehalten von 8.5 bis 11.5 % vorgesehen. Chromgehalte über 11.5 % führen zur verstärkten Bildung von groben M₇C₃-Carbiden, welche sich wie erwähnt nachteilig auf eine Korrosionsbeständigkeit auswirken. Bei Chromgehalten unter 8.5 % ist eine geforderte Korrosionsbeständigkeit nicht erreichbar. Bevorzugt liegt ein auf den Kohlenstoffgehalt abgestimmter Chromgehalt im Bereich von 9.5 bis 10.5 %. In diesem Bereich sind Anteile an M₇C₃-Carbiden gering und es wird bei guten mechanischen Eigenschaften eine äußerst hohe Korrosionsbeständigkeit erzielt.

Molybdän (Mo) liegt in einem Anteil von 1.0 bis 4.5 % vor und trägt in diesem Gehaltsbereich positiv zu einer hohen Korrosionsbeständigkeit bei. Höhere Gehalte als 4.5 % führen bei vorliegenden Kohlenstoffgehalten überraschenderweise zu keiner weiteren Steigerung der Korrosionsbeständigkeit. Vielmehr ist bei höheren Gehalten an Molybdän und gegebenen Kohlenstoff die Korrosionsbeständigkeit tendenziell sinkend. Dies kann durch eine verstärkte Bildung von M₇C₃ und/oder M₆C-Carbiden erklärt werden, welche zu einer Molybdän-Verarmung der Matrix und damit zu erhöhter Korrosionsanfälligkeit führt.

Vanadium (V) liegt im Gehaltsbereich von 1.0 bis 2.5 % vor und fördert in diesem Bereich wirksam eine Bildung von erwünschten MC-Carbiden. Bei höheren Gehalten als 2.5 % kann es bei der Herstellung zur Ausscheidung von groben Carbiden aus der Schmelze kommen. Bei niedrigeren Gehalten als 1.0 % lässt die Wirksamkeit in Bezug auf die Ausbildung von MC-Carbiden nach.

Wolfram (W) kann in Gehalten bis zu 2.0 % vorgesehen sein. Höhere Gehalte als 2.0 % sind nachteilig, da ähnlich wie bei Molybdängehalten von mehr als 4.5 % besonders M₆C-Carbide gebildet werden können und zusätzlich die Neigung zur M₇C₃-Bildung in Kombination mit den vorliegenden Chromgehalten zunimmt. Bevorzugt ist ein Wolframgehalt auf 0.5 % beschränkt.

Niob (Nb) und/oder Tantal (Ta) können in einer erfindungsgemäßen Legierung mit jeweils maximal 0.5 % vorhanden sein und in diesen geringen Gehalten eine Ausbildung von MC-Carbiden begünstigen. Höhere Gehalte als 0.5 % können dazu führen, dass sich direkt aus der Schmelze grobe Carbide ausscheiden. Diese groben Carbide sind unerwünscht, da die Roll- bzw. Gleiteigenschaften von Lagern nachteilig beeinflusst werden.

Cobalt (Co) kann in einem Anteil bis maximal 0.5 % vorliegen. Dieses Element wirkt sich bei erhöhten Anlasstemperaturen negativ auf die Korrosionsbeständigkeit aus, da es die Triebkraft zur Bildung von M₇C₃-Carbiden erhöht. Weiters verschlechtert sich mit zunehmendem Cobaltgehalt die Zähigkeit von über dem Sekundärhärtemaximum angelassenen Proben drastisch. Von Vorteil ist es daher, dieses Element gehaltsmäßig auf weniger als jeweils 0.2 % zu beschränken.

Nickel (Ni) setzt wie Co die Korrosionsbeständigkeit aufgrund von erhöhter Triebkraft zur M₇C₃-Carbidbildung herab, jedoch resultieren steigende Ni-Gehalte in verbesserten Duktilitätseigenschaften. Je nach Anforderungsprofil ist ein Gehalt von 0 bis 3 % anzustreben.

Stickstoff (N) begünstigt eine Restaustenitbildung und sollte daher in Gehalten von maximal 0.01 % vorliegen.

Das weitere Ziel der Erfindung wird durch ein Lager oder Lagerteil nach Anspruch 12 erreicht. Da das Lager bzw. Lagerteil ein komplexes Anforderungsprofil in Bezug auf Festigkeit, günstiges Verschleißverhalten und niedrige Rollkontaktermüdung erfüllt und zusätzlich eine außerordentlich große Korrosionsbeständigkeit aufweist, ist eine lange Gebrauchsdauer gegeben. Vor allem hierin und in seiner hohen Belastbarkeit auch bei Kontakt mit korrosiven Medien oder in solchen sind die Vorteile eines erfindungsgemäßen Lagers oder Lagerteils zu sehen.

Weitere Vorteile und Wirkungen der Erfindung ergeben sich aus dem Zusammenhang der Beschreibung und den Ausführungsbeispielen.

Im Folgenden ist die Erfindung anhand von Untersuchungsergebnissen und im Vergleich mit dem Stand der Technik noch weitergehend dargestellt.

Es zeigen
- Fig. 1:: Versuchsanordnung zur Durchführung von Ball-on-Disc (BOD) Untersuchungen;
- Fig. 2:: Diagramm der Verschleißspurtiefe bei BOD-Untersuchungen für Legierungen A bis M;
- Fig. 3:: Diagramm der erreichten Lebensdauer von Proben aus Legierungen D und M bei Überrolluntersuchungen;
- Fig. 4:: Lochfraßpotential, Ruhepotential und Repassivierungspotential für Legierungen A bis E;
- Fig. 5:: Schliffbilder von Legierungen D und G;
- Fig. 6:: Lochfraßpotential, Ruhepotential und Repassivierungspotential für Legierungen H, I und J im Vergleich mit Legierung D;
- Fig. 7:: Lochfraßpotential, Ruhepotential und Repassivierungspotential für Legierungen K und L im Vergleich mit Legierung D;
- Fig. 8:: Stromdichte-Potential-Kurven von Legierung D für verschiedene Anlasstemperaturen;
- Fig. 9:: Diagramm des Härteverlaufs und des Verlaufs des Lochfraßpotentials von Legierung D für verschiedene Anlasstemperaturen;
- Fig. 10:: Transmissonselektronenmikroskopische (TEM)- und Chromverteilungsaufnahmen der Legierung D nach einem dreimaligen Anlassen für zwei Stunden bei 400 °C und 560 °C.

Aus Tabelle 1 sind chemische Zusammensetzungen von untersuchten Legierungen ersichtlich. Die Legierungen wurden im Vakuum erschmolzen oder umgeschmolzen. Die so hergestellten Werkstücke wurden anschließend einer Wärmebehandlung bestehend aus Austenitisieren, Abschrecken und dreimaligem Anlassen für zwei Stunden unterworfen. Ein Restaustenitanteil betrug in allen Fällen weniger als 6 Volumenprozent.

**Tabelle 1: Chemische Zusammensetzungen von untersuchten Legierungen A bis M**

| Legierung | Chemische Zusammensetzung [in Gew.-%] | | | | | | | | |
|---|---|---|---|---|---|---|---|---|---|
| | C | Cr | V | Mo | Ni | Co | Si | Mn | Fe |
| A | 0.66 | 3.92 | 1.55 | 2.96 | 0.04 | | 0.15 | 0.23 | Rest |
| B | 0.69 | 5.92 | 1.63 | 3.00 | 0.04 | | 0.19 | 0.26 | Rest |
| C | 0.67 | 7.79 | 1.76 | 2.87 | 0.03 | | 0.16 | 0.25 | Rest |
| D | 0.60 | 10.10 | 1.99 | 2.90 | 0.04 | | 0.19 | 0.21 | Rest |
| E | 0.62 | 12.01 | 2.10 | 2.76 | 0.04 | | 0.20 | 0.24 | Rest |
| F | 0.57 | 9.84 | 2.00 | 1.44 | 0.02 | | 0.15 | 0.22 | Rest |
| G | 0.69 | 9.61 | 1.90 | 4.24 | 0.05 | | 0.15 | 0.25 | Rest |
| H | 0.62 | 9.84 | 1.59 | 2.80 | 0.04 | 4.93 | 0.18 | 0.24 | Rest |
| I | 0.61 | 9.97 | 1.61 | 2.80 | 0.05 | 10.00 | 0.18 | 0.27 | Rest |
| J | 0.71 | 10.03 | 1.56 | 2.87 | 0.05 | 14.91 | 0.19 | 0.26 | Rest |
| K | 0.64 | 9.94 | 1.73 | 2.87 | 1.49 | | 0.16 | 0.21 | Rest |
| L | 0.67 | 9.85 | 1.63 | 2.78 | 2.98 | 4.92 | 0.18 | 0.26 | Rest |
| M | 0.79 | 4.10 | 1.04 | 4.20 | 0.05 | | 0.20 | 0.26 | Rest |

### I. Festigkeitskennwerte

Von den Legierungen A bis L sowie der Referenzlegierung M, welche dem Wälzlagerwerkstoff M50 entspricht, wurden im wärme behandelten Zustand die Festigkeitskennwerte und Dehnungskennwerte ermittelt. Die Wärmebehandlung bestand in allen Fällen aus einem Austenitisieren bei einer Temperatur zwischen 1100 °C und 1200 °C, gefolgt von einem Abschrecken und einem dreimaligen Anlassen der Legierung bei Temperaturen zwischen 510 °C und 585 °C; die Härten betrugen 59 ± 1 HRC. Es zeigte sich, dass bei diesen Härten für alle Legierungen Zugfestigkeitswerte R_{p0.2} bzw. Rₘ von jeweils mehr als 1700 MPa bzw. 2000 MPa erreicht wurden. Legierung D beispielsweise wies einen R_{p0.2}-Wert von 2000 MPa und einen Rₘ-Wert von 2334 MPa auf und liegt damit im Bereich der Werte der Referenzlegierung M.

Hinsichtlich der Dehnungskennwerte, insbesondere der Bruchdehnung, sind die Legierungen A bis D, H, I, K und L der Legierung M deutlich überlegen. So weisen beispielsweise Legierungen A bis D eine um 50 % erhöhte Bruchdehnung auf (z.B. Legierung D von 4.44 % gegenüber 2.55 % der Legierung M). Die Legierungen E und F haben innerhalb der Messunsicherheit eine Bruchdehnung etwa im Bereich der Legierung M. Legierung J weist eine Bruchdehnung von lediglich 0.07 % auf.

Aus den ermittelten Festigkeiten und Dehnungswerten ergibt sich, dass die untersuchten Legierungen mit Ausnahme der Legierung J die Mindestanforderungen an Festigkeit und Dehnung für Werkstoffe für Wälzlager erfüllen.

### II. Ball-on-Disc-Erprobungen

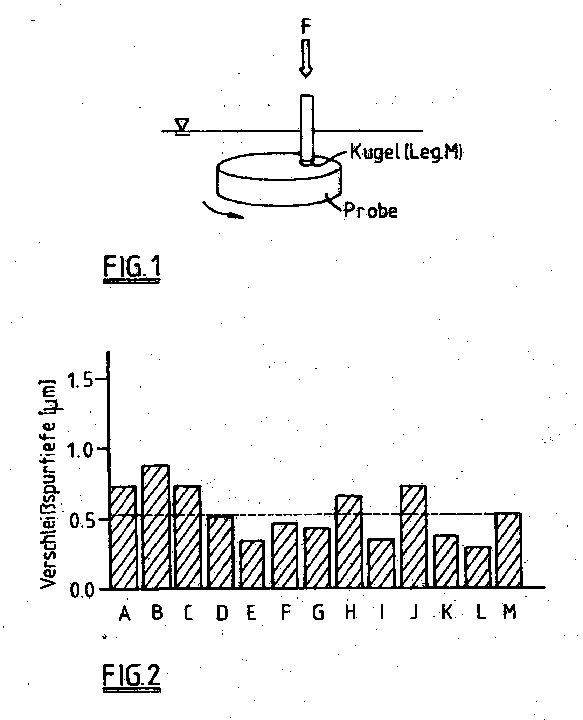

Legierungen A bis M wurden mittels der Prüfmethode Ball-on-disc, wie in Figur 1 dargestellt, in Bezug auf ihr Verschleißverhalten untersucht und die Verschleißspurtiefe gemessen. Um vergleichbare Schmierverhältnisse im BOD-Versuch wie im Triebwerkslager zu erreichen, wurde ein gleicher λ-Wert von 0.8 (Kennzahl für die Kontaktbedingungen im Schmierspalt) eingestellt. Die Untersuchungsparameter waren: Radius der Spur: 5 mm
Gleitgeschwindigkeit: 10 cm/s
aufgebrachte Kraft: 15 N
Länge der Verschleißspur: 1000 m
Kugeldurchmesser: 6 mm
Kugelmaterial: Legierung M
Temperatur 150 °C
Umgebungsmedium: Öl (Mobil Jet II)

Die Ergebnisse dieser Untersuchungen sind in Figur 2 dargestellt. Wie ersichtlich, war für die Legierungen D bis G sowie I, K und L eine Verschleißspurtiefe geringer als für Legierung M. Daraus ergibt sich, dass sich diese Legierungen in Bezug auf das Verschleißverhalten als Lagerwerkstoffe exzellent eignen.

### III. Überrolleigenschaften (Roll contact fatigue test)

Überrollversuche wurden mit einem drei-Kugel-gegen-Welle-Tester bewusst mit überhöhter Flächenpressung durchgeführt. Unter Testbedingungen herrschte eine maximale Pressung von 6400 GPa im Kontaktbereich.

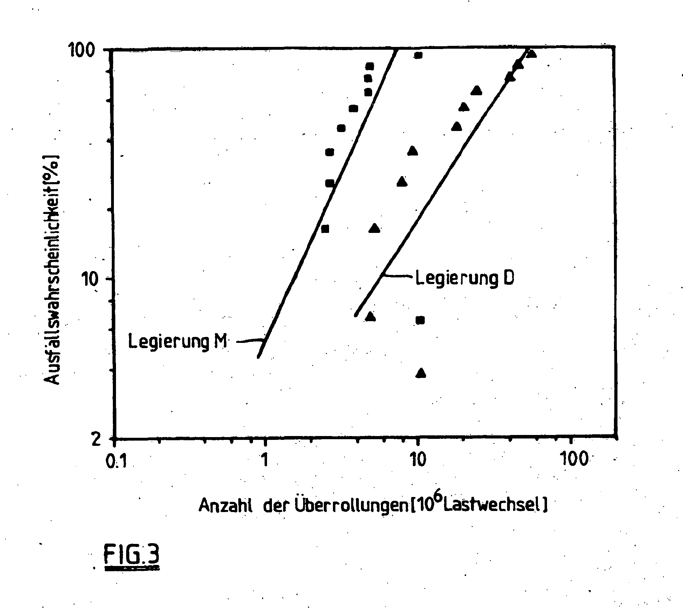

Die Ergebnisse bzw. die Weibull-Verteilungen zeigten, dass die Legierungen A bis L mit Ausnahme von Legierung J im Überrollversuch eine gleiche oder größere Lebensdauer erbringen wie Legierung M. Insbesondere für Legierung D zeigt sich hinsichtlich der Überrolleigenschaften, dass diese Legierung gegenüber Legierung M wesentlich bessere Eigenschaften aufweist (siehe Figur 3): Für Legierung D ergibt sich bei Überrollen eine Ausfallswahrscheinlichkeit von 10 % bei 5.50*10⁶ Lastwechsel. Bei Legierung M wird dieselbe Ausfallswahrscheinlichkeit bereits bei 1.57*10⁶ Lastwechseln erreicht.

### IV. Korrosionsbeständigkeit

Als Resümee der unter I. bis III. dargestellten Untersuchungsergebnisse kann festgehalten werden, dass die Legierungen D, E, F, G, I, K und L den Anforderungen in Bezug auf Festigkeit, Dehnung, Verschleißverhalten und Überrolleigenschaften im Bereich von der Legierung M bzw. dem Standardwerkstoff M50 liegen und daher diesbezüglich die Anforderungen an Wälzlagerwerkstoffe erfüllen.

In weiteren Reihen wurde untersucht, inwieweit die untersuchten Legierungen korrosionsbeständig sind, so dass sie auch in korrosiven Medien einsetzbar sind, was für den schnell korrodierenden Schnellstahl M50 bzw. Legierung M nicht der Fall ist. Diese Untersuchungen erfolgten durch Aufnahme von Stromdichte-Potential-Kurven in einer wässrigen Natriumchloridlösung mit einem Gehalt von 50 ppm Chloridionen. Aus diesen Aufnahmen wurde für die einzelnen Legierungen das Lochfraßpotential abgelesen.

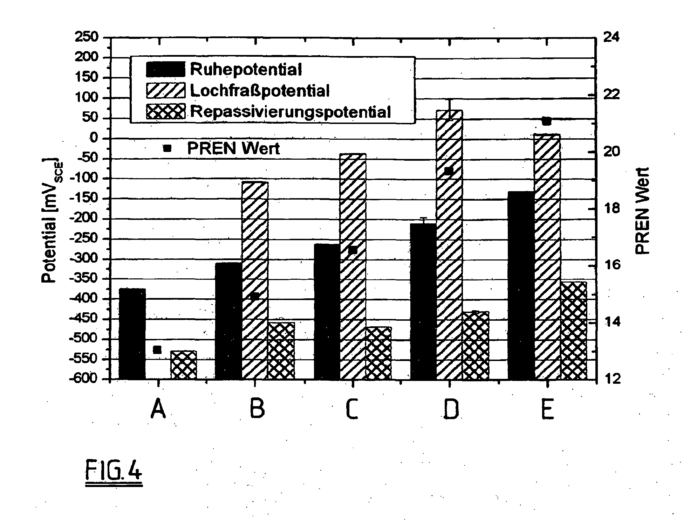

Aus Figur 4 ist ersichtlich, dass für die Legierungen A bis E, also mit steigendem Chromgehalt, das Lochfraßpotential bzw. die Korrosionsbeständigkeit von Legierung A bis zu Legierung D zunimmt, dann bei Legierung E wieder abnimmt. Die Legierungen A, B und C weisen aufgrund eines zu geringen Chromgehaltes nicht die gewünschte Korrosionsbeständigkeit auf, wohl aber die Legierung D. Legierung E weist zwar einen höheren Chromgehalt auf, als Legierung D, weshalb ein höherer PREN-Wert gegeben ist. Der PREN-Wert (berechnet nach: PREN = % Cr + 3.3% Mo*(16 - 30%N)) steht für Korrosionsbeständigkeit und der Fachmann würde mit höherem PREN-Wert eine höhere Korrosionsbeständigkeit erwarten lassen. Tatsächlich ist es aber so, dass sich mit zunehmendem Chromgehalt, insbesondere über 11.5 % Gewichtsprozent, M₇C₃ -Carbide ausscheiden. Solche Carbide bringen zwar Härte, weisen aber entsprechend ihrer Stöchiometrie einen hohen Chromanteil auf. Folge ist, dass die Bildung solcher Carbide zum Entzug von Chrom aus der Matrix führt, was eine Korrosionsbeständigkeit herabsetzt.

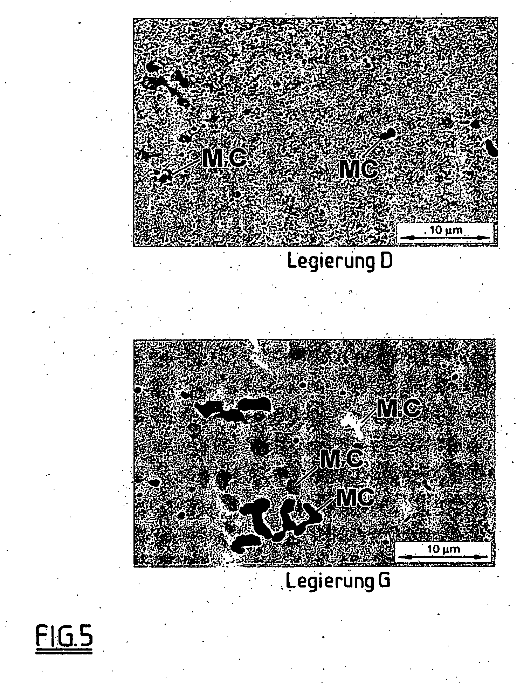

Mit Bezug auf die Auswirkungen verschiedener Molybdängehalte wurde bei erfindungsgemäßen Legierungen höchste Korrosionsbeständigkeit bei Legierung D festgestellt, in welcher hauptsächlich MC-Carbide vorliegen. In Legierung F ist ein geringerer Molybdängehalt gegeben, was zu geringerer Korrosionsbeständigkeit führt. In Legierung G hingegen ist zwar ein Molybdängehalt höher, allerdings sind auch Anteile an M₇C₃-Carbiden höher und zusätzlich treten auch M₆C-Carbide auf, wie aus Figur 5 ersichtlich. Daher ist Legierung G trotz höherem Molybdängehalt weniger korrosionsbeständig als Legierung D.

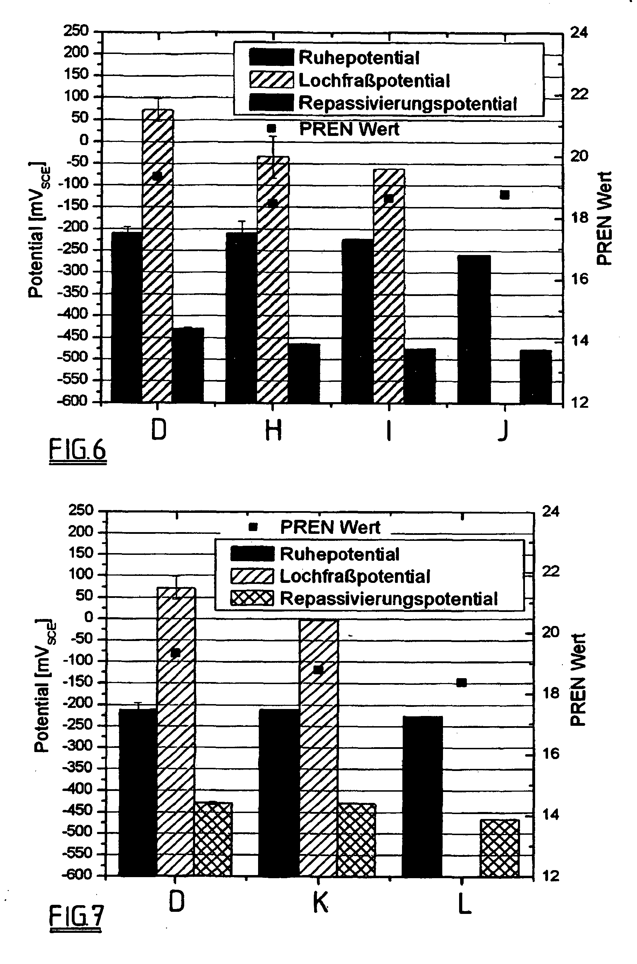

Der Einfluss von Cobalt und Nickel ist aus den Figuren 6 (Co) und 7 (Ni) ersichtlich. Für beide Elemente trifft zu, dass mit steigendem Gehalt die Korrosionsbeständigkeit abnimmt. Dementsprechend können die Legierungen I, J, K und L die geforderte Korrosionsbeständigkeit nicht erbringen. Der Grund hierfür liegt vermutlich in der erhöhten Triebkraft zur Bildung von M₇C₃-Carbiden, welche durch Cobalt und/oder Nickel verursacht wird.

Als Resümee der Korrosionsversuche lässt sich festhalten, dass die Legierungen D, F, G und H die Anforderungen an die Korrosionseigenschaften erfüllen.

In Gesamtbetrachtung von mechanischen Eigenschaften, Verschleiß- und Überrolleigenschaften sowie Korrosionsbeständigkeit, ergibt sich somit, dass die Legierungen D, F und G das gestellte Eigenschaftsprofil aufweisen, wohingegen die übrigen untersuchten Legierungen zumindest in Bezug auf eine Eigenschaft einen Mindestwert nicht erreichen.

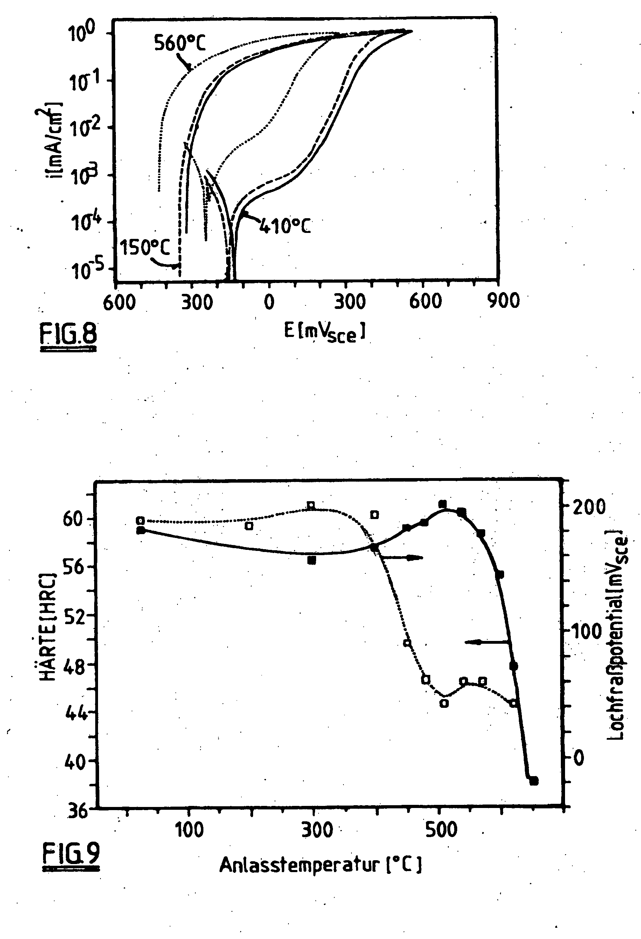

Eine großtechnisch hergestellte Legierung D wurde schließlich noch im Hinblick auf Eigenschaftsänderungen mit verschiedener Anlasstemperatur untersucht. Dabei zeigte sich überraschend, dass eine Korrosionsbeständigkeit von der Anlasstemperatur abhängt. Wie Stromdichte-Potential-Kurven in Figur 8 zeigen, ist für Legierung D bei Anlasstemperaturen bis zu 450 °C ein hohes Lochfraßpotential gegeben. Bei einer höheren Anlasstemperatur von 560 °C ist hingegen ein niedrigeres Lochfraßpotential von etwa + 20 mV gegeben.

In Figur 9 sind Verläufe des Lochfraßpotentials und der Härte mit Variation der Anlasstemperatur dargestellt. Es ist ersichtlich, dass das Lochfraßpotential bei Anlasstemperaturen bis 450 °C über + 160 mV_{sce} liegt und danach stark auf etwa 40 bis 60 mV_{sce} abfällt. Andererseits ist auch ersichtlich, dass bereits bei Temperaturen von unter 450 °C eine für die Praxis gewünschte Härte von 59 HRC erzielt werden kann. Somit können bei Anlasstemperaturen bis zu 450 °C optimale Ergebnisse sowohl in Bezug auf mechanische Eigenschaften und Verschleißverhalten als auch in Bezug auf große Korrosionsbeständigkeit erhalten werden.

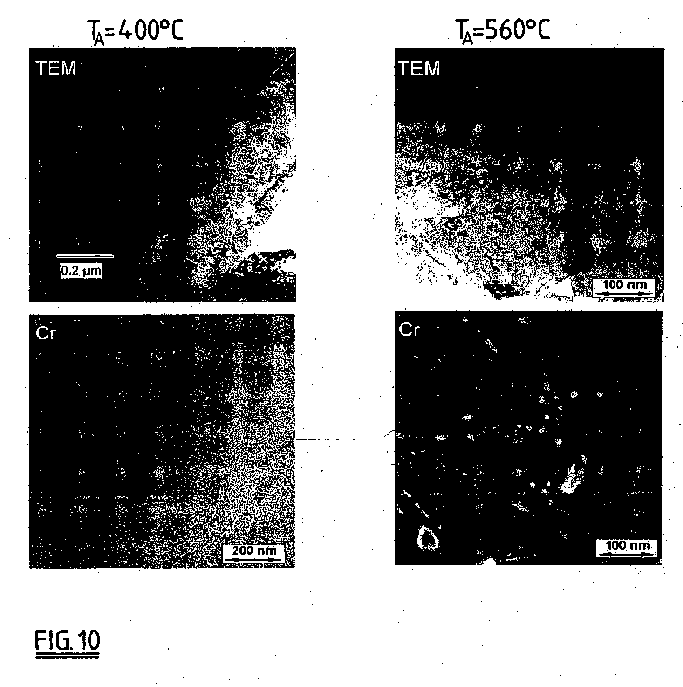

In Figur 10 sind schließlich TEM-Aufnahmen und Cr-Mapping-Aufnahmen für eine Legierung D gezeigt, welche bei 400 °C bzw. 560 °C angelassen wurde. Die Cr-Mapping-Aufnahmen zeigen, dass bei der bei 560°C angelassenen Legierung in den Randbereichen der Karbide helle Bereiche gegeben sind, was auf einen bereichsweise hohen Chromgehalt schließen lässt. Hingegen erscheint die umgebende Matrix aufgrund eines geringen Chromgehaltes dunkler. Dies zeigt, dass bei höheren Anlasstemperaturen die Matrix im Oberflächenbereich der Sekundärcarbide an Chrom verarmt, was zu einer Abnahme der Korrosionsbeständigkeit führt.

Untersuchungen zum Karbidanteil an großtechnisch hergestellten und wärmebehandelten Legierungen D zeigten, dass ein Anteil an MC-Carbiden zwischen 0.7 Volumenprozent bei einer Austenitisierungstemperatur von 1140 °C und 1.8 Volumenprozent bei einer Austenitisierungstemperatur von 1080 °C lag. Ein Anteil an M₇C₃-Carbiden betrug 0.2 Volumenprozent (Austenitisierungstemperatur von 1140 °C) bzw. es waren keine M₇C₃-Carbide feststellbar (Austenitisierungstemperatur von 1080 °C). Somit liegen in allen Fällen mehr als 75 % der vorhandenen Carbide als MC-Carbide vor.

## Patentansprüche

1. Legierung für Wälzlager von Luftfahrzeugen bestehend aus (in Gewichtsprozent)
0.45 bis 1.0 % Kohlenstoff
max. 2.0 % Mangan
max. 1.0 % Silicium
8.5 bis 11.5 % Chrom
1.0 bis 4.5 % Molybdän
1.0 bis 2.5 % Vanadium
max. 2.0 % Wolfram
max. 0.5 % Niob
max. 0.5 % Tantal
max. 3.0 % Nickel
max. 0.5 % Cobalt
max. 0.1 % Aluminium
max. 0.01 % Stickstoff
Rest Eisen und herstellungsbedingte Verunreinigungen,
wobei ein Carbidanteil 0.5 bis 7 Volumenprozent beträgt und ein Anteil an Metallcarbiden des Typs M₇C₃ weniger als 3 Volumenprozent beträgt.

2. Legierung nach Anspruch 1, enthaltend 0.55 bis 0.85 %, vorzugsweise bis 0.75 % Kohlenstoff.

3. Legierung nach Anspruch 1 oder 2, enthaltend 9.5 bis 10.5 % Chrom.

4. Legierung nach einem der Ansprüche 1 bis 3, enthaltend 2.5 bis 3.5 %, insbesondere 2.65 bis 3.25 %, Molybdän.

5. Legierung nach einem der Ansprüche 1 bis 4, enthaltend 1.65 bis 2.25 %, insbesondere 1.8 bis 2.5 %, Vanadium.

6. Legierung nach einem der Ansprüche 1 bis 5, enthaltend max. 0.5 % Wolfram.

7. Legierung nach einem der Ansprüche 1 bis 6, enthaltend maximal 0.3 % Mangan.

8. Legierung nach einem der Ansprüche 1 bis 7, enthaltend 0.05 bis 0.2 % Silicium.

9. Legierung nach einem der Ansprüche 1 bis 8, enthaltend max. 0.5 % Nickel.

10. Lager oder Lagerteil, insbesondere Wälzlager oder Wälzlagerteil, aus einer Legierung nach einem der Ansprüche 1 bis 9.

11. Verwendung einer Legierung nach einem der Ansprüche 1 bis 9 als Bauteil oder Komponente in einem Luftfahrzeug.

## Claims

1. An alloy for roller bearings of aircraft consisting of (in percent by weight)
0.45 to 1.0 % carbon
max. 2.0 % manganese
max. 1.0 % silicon
8.5 to 11.5 % chromium
1.0 to 4.5 % molybdenum
1.0 to 2.5 % vanadium
max. 2.0 % tungsten
max. 0.5 % niobium
max. 0.5 % tantalum
max. 3.0 % nickel
max. 0.5 % cobalt
max. 0.1 % aluminum
max. 0.01 % nitrogen
remainder iron and production-related impurities, wherein a carbide fraction amounts to 0.5 to 7 percent by volume and a fraction of metal carbides of type M₇C₃ amounts to less than 3 percent by volume.

2. The alloy according to claim 1, containing 0.55 to 0.85 %, preferably to 0.75 % carbon.

3. The alloy according to either of claims 1 or 2, containing 9.5 to 10.5 % chromium.

4. The alloy according to one of claims 1 to 3, containing 2.5 to 3.5 %, in particular 2.65 to 3.25 % molybdenum.

5. The alloy according to one of claims 1 to 4, containing 1.65 to 2.25 %, in particular 1.8 to 2.5 % vanadium.

6. The alloy according to one of claims 1 to 5, containing a maximum of 0.5 % tungsten.

7. The alloy according to one of claims 1 to 6, containing a maximum of 0.3 % manganese.

8. The alloy according to one of claims 1 to 7, containing 0.05 to 0.2 % silicon.

9. The alloy according to one of claims 1 to 8, containing a maximum of 0.5 % nickel.

10. A bearing or bearing part, in particular roller bearing or roller bearing part, made of an alloy according to one of claims 1 to 9.

11. A use of an alloy according to one of claims 1 to 9 as a part or component in an aircraft.

## Revendications

1. Alliage pour roulements d'aéronefs, constitué de (en pourcentage en poids)
0,45 à 1,0 % de carbone
2,0 % maxi de manganèse
1,0 % maxi de silicium
8,5 à 11,5 % de chrome
1,0 à 4,5 % de molybdène
1,0 à 2,5 % de vanadium
2,0 % maxi de tungstène
0,5 % maxi de niobium
0,5 % maxi de tantale
3,0 % maxi de nickel
0,5 % maxi de cobalt
0,1 % maxi d'aluminium
0,01 % maxi d'azote
un radical de fer et des impuretés dues à la production,
une part de carbure s'élevant à de 0,5 à 7 pour cent en volume et une part en carbures métalliques du type M₇C₃ s'élevant à moins de 3 pour cent en volume.

2. Alliage selon la revendication 1, contenant de 0,55 à 0,85 %, de préférence jusqu'à 0,75 % de carbone.

3. Alliage selon la revendication 1 ou 2, contenant de 9,5 à 10,5 % de chrome.

4. Alliage selon l'une quelconque des revendications 1 à 3, contenant de 2,5 à 3,5 %, notamment de 2,65 % à 3,25 % de molybdène.

5. Alliage selon l'une quelconque des revendications 1 à 4, contenant de 1,65 à 2,25 %, notamment de 1,8 à 2,5 % de vanadium.

6. Alliage selon l'une quelconque des revendications 1 à 5, contenant 0,5 % maxi de tungstène.

7. Alliage selon l'une quelconque des revendications 1 à 6, contenant 0,3 % maxi de manganèse.

8. Alliage selon l'une quelconque des revendications 1 à 7, contenant de 0,05 à 0,2 % de silicium.

9. Alliage selon l'une quelconque des revendications 1 à 8, contenant 0,5 % maxi de nickel.

10. Palier ou partie de palier, notamment roulement ou partie de roulement en un alliage selon l'une quelconque des revendications 1 à 9.

11. Utilisation d'un alliage selon l'une quelconque des revendications 1 à 9 en tant qu'élément de construction ou en tant que composant dans un aéronef.
